# FASCICULE DE BREVET EUROPEEN

(11) **EP 3 463 942 B1**
(45) Date de publication et mention de la délivrance du brevet: **14.12.2022**
(21) Numéro de dépôt: 17725695.5
(22) Date de dépôt: 28.04.2017
(51) Int. Cl.: B60H 1/00, B60H 1/32

(54) **BOITIER POUR SYSTEME DE CHAUFFAGE, VENTILATION ET/OU CLIMATISATION DE VEHICULE AUTOMOBILE**
GEHÄUSE FÜR KRAFTFAHRZEUGHEIZUNG, -BELÜFTUNGS- UND/ODER -KLIMATISIERUNGSSYSTEM
HOUSING FOR A MOTOR VEHICLE HEATING, VENTILATION AND/OR AIR CONDITIONING SYSTEM

(30) Priorité: 26.05.2016 FR 1654748
(43) Date de publication de la demande: 10.04.2019
(73) Titulaire: Valeo Systemes Thermiques, 78320 Le Mesnil Saint Denis (FR)
(72) Inventeur: PERNET, Stéphane, 78322 LE MESNIL SAINT-DENIS CEDEX (FR); BRAULT, Julien, 78322 LE MESNIL SAINT-DENIS CEDEX (FR)
(74) Mandataire: Valeo Systèmes Thermiques
(86) Numéro de dépôt international: PCT/FR2017/051024
(87) Numéro de publication internationale: WO 2017/203115

(56) Documents cités:
- JP-A- 2001 315 525
- JP-U- S63 162 622
- KR-A- 20090 064 822
- KR-A- 20100 005 924
- US-A1- 2010 212 347
- US-A1- 2012 034 077
- US-A1- 2015 089 969

## Description

L'invention a pour objet un boîtier pour un système de chauffage, ventilation et/ou climatisation de véhicule automobile.

Un tel système permet de traiter thermiquement un flux d'air, provenant principalement de l'extérieur du véhicule automobile, et destiné à alimenter l'habitacle.

Le boîtier du système est destiné à recevoir divers éléments du système, et on peut de manière générale définir plusieurs blocs selon leurs fonctions.

Par exemple, le boîtier peut être divisé en un bloc d'entrée, où l'air extérieur pénètre le boîtier et est mis en mouvement par un ventilateur, un bloc dit bloc froid, comprenant un évaporateur, un bloc de mixage où plusieurs flux sont mélangés de sorte que l'air sortant du boîtier est conforme à une température souhaitée par un utilisateur du véhicule automobile.

Il est connu que le boîtier comprend une ou plusieurs portion(s) de jonction entre le boîtier et une autre pièce du système de chauffage, ventilation et/ou climatisation.

C'est par exemple le cas dans le bloc d'entrée, où un orifice est prévu dans le boîtier pour pouvoir installer une unité de commande du ventilateur.

Par ailleurs, du fait que l'air circulant dans le boîtier est chargé d'humidité et/ou de pluie, il n'est pas rare qu'un flux d'eau s'écoule dans le boîtier, risquant alors d'infiltrer les composants du système, en particulier ceux disposés au niveau des portions de jonction, et de provoquer des pannes du système de chauffage, ventilation et/ou climatisation.

Des exemples sont divulgués dans les documents suivants: US2012034077, US2015089969, US2010212347, KR20100005924, KR20090064822, JP2001315525 et JPS63162622U.

Le but de l'invention est de remédier au moins partiellement à ces inconvénients.

A cet effet, l'invention a pour objet un boîtier pour un système de chauffage, ventilation et/ou climatisation de véhicule automobile destiné à traiter thermiquement un flux d'air, le boîtier comprenant toutes les caractéristiques de la revendication 1.

Ainsi, grâce au boîtier selon la présente invention, l'eau due à l'humidité de l'air et/ou de pluie est déviée hors de la portion de jonction et ne s'infiltre pas dans ladite pièce du système, optimisant de ce fait la protection du système.

Selon une autre caractéristique de l'invention, l'orifice est rectangulaire et la portion de jonction comprend trois parois de déviation d'eau.

Selon une autre caractéristique de l'invention, deux des trois parois de déviation d'eau, dites première et deuxième parois, s'étendent sensiblement parallèlement l'une à l'autre, l'autre paroi de déviation, dite troisième paroi, étant disposée de sorte à joindre la première et la deuxième parois de déviation.

Selon une autre caractéristique de l'invention, le boîtier comprend deux canaux distincts de circulation d'air, l'un des canaux étant configuré pour faire circuler un air extérieur au véhicule automobile, l'autre des canaux étant configuré pour faire circuler un air issu d'un habitacle du véhicule automobile.

L'invention a également pour objet un système de chauffage, ventilation et/ou climatisation de véhicule automobile destiné à traiter thermiquement un flux d'air, comprenant un boîtier tel que décrit précédemment.

Selon une autre caractéristique de l'invention, le système est dépourvu de joint d'étanchéité dans la portion de jonction.

Selon une autre caractéristique de l'invention, le système comprend une unité de commande d'un ventilateur d'entrée d'air dans le boîtier, l'unité de commande étant disposée dans la portion de jonction.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue de dessus d'un intérieur d'un boîtier pour un système de chauffage, ventilation et/ou climatisation selon la présente invention ;
- la figure 2 illustre une vue en perspective d'une partie du boîtier de la figure 1 ; et
- les figures 3 et 4 illustrent des vues de détail en perspective de la figure 1.

### Boîtier

L'invention a pour objet un boîtier référencé 1 pour un système de chauffage, ventilation et/ou climatisation de véhicule automobile.

Le système est destiné à traiter thermiquement un flux d'air entrant dans le boîtier 1 par une entrée (non illustrée) à une température donnée de sorte qu'un flux d'air sortant du boîtier 1 par une sortie (non illustrée) et entrant dans l'habitacle (non illustré) du véhicule soit à une température égale à une température souhaitée par un utilisateur du véhicule.

L'invention s'applique avantageusement à un boîtier dit de type double flux, dans lequel sont dissociés deux canaux de circulation d'air, à savoir un canal d'air extérieur et un canal d'air recyclé, c'est-à-dire provenant de l'habitacle.

En effet, ce type d'architecture impose une ouverture en partie basse dont il faut détourner l'eau.

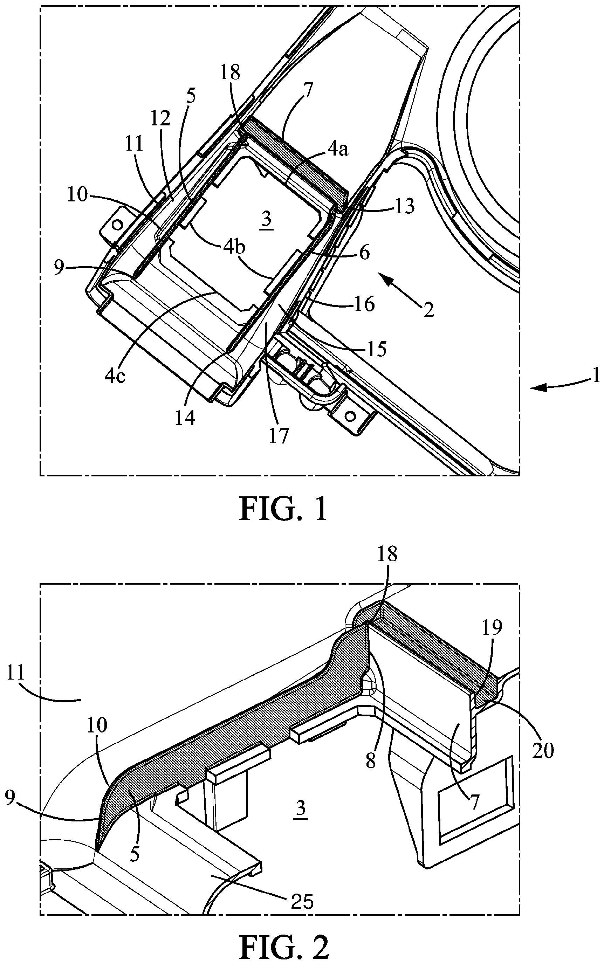

Comme visible sur les figures 1 et 2, le boîtier 1 comprend au moins une portion 2 formant jonction entre le boîtier 1 et autre une pièce du système de chauffage, ventilation et/ou climatisation.

La portion formant jonction est appelée dans la suite de la description portion de jonction 2.

Dans le mode de réalisation illustré sur les figures, la portion formant jonction 2 est un orifice 3.

Bien entendu, l'invention ne se limite pas à ce type de jonction mais couvre également toute interface entre le boîtier et un composant du système, ou entre deux parties du boîtier.

Dans le mode de réalisation illustré, la portion de jonction fait partie d'un bloc dit bloc d'entrée 30 du boîtier 1, destiné à recevoir le ventilateur d'entrée, pour la mise en mouvement de l'air dans le boîtier 1 ainsi qu'une unité de commande du ventilateur, l'orifice 3 étant destiné à recevoir l'unité de commande.

Bien entendu, l'invention ne se limite pas à cette pièce mais s'applique également à d'autres composants du système, tels que par exemple le ventilateur lui-même, et/ou un évaporateur.

L'orifice 3 présente un contour de forme générale sensiblement rectangulaire, délimité par quatre bords 4 égaux deux à deux, et appelés bord amont 4a, bords latéraux 4b et bord aval 4c.

Comme particulièrement visible sur les figures 1 et 2, la portion de jonction 2 est conformée pour évacuer un écoulement d'eau issue du flux d'air.

De préférence, le boîtier 1 est obtenu par injection d'une matière thermoplastique entre deux coquilles d'un moule.

L'une des coquilles présente une forme correspondant à la portion de jonction 2, de sorte que, lors d'une opération de démoulage, la matière injectée forme le boîtier 1 muni de la portion de jonction 2.

De préférence, la portion de jonction 2 comprend au moins une paroi de déviation d'eau, ladite au moins une paroi étant disposée de sorte que l'eau s'écoule entre la paroi et une autre partie du boîtier.

Sur le mode de réalisation illustré, la portion de jonction comprend trois parois de déviation d'eau, appelées première, deuxième et troisième parois de déviation et référencées respectivement 5, 6 et 7.

Chacune des parois de déviation 5, 6 et 7 est disposée le long d'un bord de l'orifice 3.

Comme visible sur les figures 1 et 2, la première paroi 5 et la deuxième paroi 6 s'étendent parallèlement l'une à l'autre le long respectivement d'un bord latéral 4a de l'orifice rectangulaire 3.

La première paroi 5 comprend une première extrémité 8 et une deuxième extrémité 9.

La première paroi 5 s'étend dans un plan orthogonal à un fond 10 délimité entre le bord 4 de l'orifice 3 associé à la première paroi 5 et un bord de délimitation 11 du boîtier 1.

Ainsi, l'espace délimité par la première paroi 5, le fond 10 et le bord 11 forme un canal d'écoulement d'eau 12.

De la même manière, la deuxième paroi 6 comprend une première extrémité 13 et une deuxième extrémité 14.

La deuxième paroi 6 s'étend dans un plan orthogonal à un fond 15 délimité entre le bord 4 de l'orifice 3 associé à la deuxième paroi 6 et un bord de délimitation 16 du boîtier 1.

Ainsi, l'espace délimité par la deuxième paroi 6, le fond 15 et le bord 4 forme un canal d'écoulement d'eau 17.

Le canal d'écoulement d'eau 17 s'étend sensiblement parallèlement au canal d'écoulement 12.

La troisième paroi 7 comprend une première extrémité 18 et une deuxième extrémité 19.

La troisième paroi 7 s'étend entre la première extrémité 8 de la première paroi 5 et la première extrémité 9 de la deuxième paroi 6.

La première extrémité 8 de la première paroi 5 repose contre la première extrémité 18 de la troisième paroi 7.

La première extrémité 9 de la deuxième paroi 6 repose contre la deuxième extrémité 19 de la troisième paroi 7.

Le boîtier 1 comprend une gorge formant canal d'écoulement d'eau.

La gorge 20 présente une section transversale de la forme générale d'un U comprenant une branche principale et deux branches d'extrémité.

La branche principale de la gorge 20 est délimitée par la troisième paroi 7 et une paroi s'étendant parallèlement à la paroi 7 du côté de la paroi 7 opposé au bord 4 de l'orifice.

Chaque branche d'extrémité est délimitée par l'une 18, 19 des extrémités de la troisième paroi 7 et par un bord d'extrémité disposé en regard de ladite extrémité en étant espacé de ladite extrémité 18, 19.

Ainsi, l'eau du flux d'air circulant dans le boîtier 1 s'écoule dans la branche principale et les branches d'extrémité de la gorge 20, d'où elle est évacuée dans les canaux d'écoulement parallèles 12 et 17.

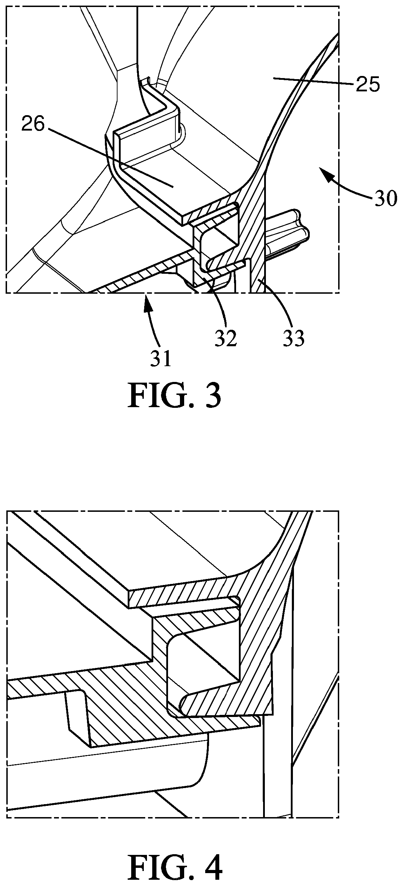

Comme particulièrement visible sur la figure 3, le boîtier 1 comprend comprenant une portion incurvée 25 disposée en aval de la portion de jonction relativement à l'écoulement d'eau.

Sur le mode de réalisation illustrée, la portion incurvée 25 est une marche, avantageusement arrondie, dont une première hauteur comporte la deuxième extrémité 9 de la première paroi 5, la deuxième extrémité 14 de la deuxième paroi 6 et le bord aval 4c.

Bien entendu, la portion incurvée peut présenter d'autres formes, telles qu'une marche droite ou une marche comprenant un point d'inflexion.

Une deuxième hauteur de la marche est munie d'une languette de décrochement 26, dont la fonction va être détaillée ultérieurement.

Comme visible sur la figure 4, la deuxième hauteur de la marche 25 comprend un rebord s'étendant orthogonalement à la languette 26.

Le rebord permet de guider l'eau issue des canaux d'écoulement 12 et 17.

Comme visible plus précisément sur les figures 3 et 4, le boîtier 1 comprend un bloc de réception d'un échangeur de chaleur du système de chauffage, ventilation et/ou climatisation, encore appelé bloc froid, et référencé 31.

Le bloc froid 31 est solidarisé au bloc d'entrée 30, de préférence par la coopération d'un cordon d'emboîtement 32 du bloc froid 31 avec un cordon d'emboîtement 33 du bloc d'entrée 30.

Le cordon d'emboîtement 32 du bloc froid 31 présente une section transversale de forme générale en U, comportant une branche principale et deux branches extrémales.

Les deux branches extrémales du U sont de préférences identiques.

De même, le cordon d'emboîtement 33 du bloc d'entrée 30 présente une section transversale de forme générale en U, comportant une branche principale et deux branches extrémales.

Comme visible sur les figures 3 et 4, la languette 26 forme l'une des deux branches extrémales du U du cordon d'emboîtement 33 du bloc d'entrée 30.

La languette 26 repose contre l'une des branches extrémales du cordon 32 tandis que l'autre branche du cordon repose contre l'autre branche extrémale du cordon 32.

Comme il ressort des figures 3 et 4, la languette 26 présente une largeur supérieure aux longueurs des branches, de sorte que la languette dépasse de la branche contre laquelle elle repose.

Par exemple, la languette dépasse de la branche d'une longueur comprise entre 5 mm et 10 mm, avantageusement 9 mm.

Cette largeur supérieure de la languette assure que l'eau ne s'infiltre pas dans les cordons d'emboîtement 32 et 33 des blocs d'entrée 30 et froid 31.

Ainsi, l'eau évacuée par les deux canaux d'écoulement 12 et 17 descend la marche 25 jusqu'à la languette 26 puis continue de s'écouler dans le bloc froid 31, éventuellement jusqu'à un orifice d'évacuation des condensats, non illustré.

### Système

L'invention a également pour objet un système de chauffage, ventilation et/ou climatisation de véhicule automobile destiné à traiter thermiquement un flux d'air, comprenant le boîtier 1.

Avantageusement, le système étant dépourvu de joint d'étanchéité dans la portion de jonction 2.

De préférence, le système comprend une unité de commande d'un ventilateur d'entrée d'air dans le boîtier 1, l'unité de commande étant disposée dans la portion de jonction 2.

### Avantages

Grâce aux parois de déviation 5, 6, 7, à la marche 25 et/ou à la languette 26, le boîtier 1 assure que ni l'eau de pluie ni l'humidité n'infiltre les composants du système de chauffage, ventilation et/ou climatisation installés dans le boîtier 1.

Bien entendu, l'invention ne se limite pas au mode de réalisation illustré. En particulier, l'orifice pourrait présenter toute autre forme adaptée que la forme rectangulaire et la portion de jonction pourrait comprendre plus ou moins de trois parois de déviation d'eau,

## Revendications

1. Boîtier pour un système de chauffage, ventilation et/ou climatisation de véhicule automobile destiné à traiter thermiquement un flux d'air, le boîtier (1) comprenant une portion de jonction (2) entre le boîtier (1) et une pièce du système de chauffage, ladite portion de jonction (2) faisant partie d'un bloc dit bloc d'entrée (30) dudit boîtier (1) destiné à recevoir le ventilateur d'entrée, pour la mise en mouvement de l'air dans ledit boîtier (1) ainsi qu'une unité de commande du ventilateur d'entrée, dans lequel la portion de jonction (2) est conformée pour évacuer un écoulement d'eau issue du flux d'air et comprend au moins une paroi de déviation d'eau (5, 6, 7) disposée le long d'un bord d'un orifice (3) de sorte que l'eau s'écoule entre elle-même et une autre partie du boîtier (1), ledit orifice (3) étant destiné à recevoir l'unité de commande du ventilateur, le boîtier comprenant en outre:
- une portion incurvée (25) ou en pente disposée en aval de la portion de jonction (2) relativement à l'écoulement d'eau, **caractérisé en ce que**, le boîtier comprend:
- une languette (26) dans le prolongement de la portion incurvée (25) ,et
- un bloc de réception (31) d'un échangeur de chaleur du système de chauffage, ventilation et/ou climatisation, ledit bloc de réception (31) étant solidaire de la languette (26) par un cordon d'emboîtement (32), la languette (26) étant disposée sur le cordon d'emboîtement (32) en faisant saillie dudit cordon d'emboîtement (32).

2. Boîtier selon la revendication précédente, dans lequel l'orifice (3) est rectangulaire et la portion de jonction (2) comprend trois parois de déviation d'eau (5, 6, 7).

3. Boîtier selon la revendication précédente, dans lequel deux (5, 6) des trois parois de déviation d'eau (5, 6, 7), dites première et deuxième parois, s'étendent sensiblement parallèlement l'une à l'autre, l'autre paroi de déviation (7), dite troisième paroi, étant disposée de sorte à joindre la première et la deuxième parois de déviation (5, 6).

4. Boîtier selon l'une quelconque des revendications précédentes, comprenant deux canaux distincts de circulation d'air, l'un des canaux étant configuré pour faire circuler un air extérieur au véhicule automobile, l'autre des canaux étant configuré pour faire circuler un air issu d'un habitacle du véhicule automobile.

5. Système de chauffage, ventilation et/ou climatisation de véhicule automobile destiné à traiter thermiquement un flux d'air, comprenant un boîtier selon l'une quelconque des revendications précédentes.

6. Système selon la revendication précédente, le système étant dépourvu de joint d'étanchéité dans la portion de jonction.

7. Système selon l'une des revendications 5 ou 6, comprenant une unité de commande d'un ventilateur d'entrée d'air dans le boîtier, l'unité de commande étant disposée dans la portion de jonction.

## Patentansprüche

1. Gehäuse für ein Heizungs-, Lüftungs- und/oder Klimatisierungssystem eines Kraftfahrzeugs zur thermischen Behandlung eines Luftstroms, wobei das Gehäuse (1) einen Verbindungsabschnitt (2) zwischen dem Gehäuse (1) und einem Teil des Heizungssystems umfasst, wobei der Verbindungsabschnitt (2) Teil eines als Einlassblock (30) des Gehäuses (1) bezeichneten Blocks ist, der dazu bestimmt ist, den Einlassventilator zum Bewegen der Luft im Gehäuse (1) sowie eine Steuereinheit des Einlassventilators aufzunehmen, wobei der Verbindungsabschnitt (2) so gestaltet ist, dass er einen Wasserstrom aus dem Luftstrom ableitet, und mindestens eine Wasserablenkwand (5, 6, 7) umfasst, die entlang einer Kante einer Öffnung (3) angeordnet ist, so dass das Wasser zwischen diesem und einem anderen Teil des Gehäuses (1) fließt, wobei die Öffnung (3) dazu bestimmt ist, die Steuereinheit des Ventilators aufzunehmen, wobei das Gehäuse ferner Folgendes umfasst:
- einen gekrümmten oder geneigten Abschnitt (25), der bezogen auf den Wasserstrom stromabwärts des Verbindungsabschnitts (2) angeordnet ist,
**dadurch gekennzeichnet, dass** das Gehäuse Folgendes umfasst:
- eine Zunge (26) in der Verlängerung des gekrümmten Abschnitts (25) und
- einen Block (31) zur Aufnahme eines Wärmetauschers des Heizungs-, Lüftungs- und/oder Klimatisierungssystems, wobei der Aufnahmeblock (31) durch eine Einsteckwulst (32) fest mit der Zunge (26) verbunden ist, wobei die Zunge (26) an der Einsteckwulst (32) angeordnet ist und von der Einsteckwulst (32) vorsteht.

2. Gehäuse nach dem vorangehenden Anspruch, wobei die Öffnung (3) rechteckig ist und der Verbindungsabschnitt (2) drei Wasserablenkwände (5, 6, 7) umfasst.

3. Gehäuse nach dem vorangehenden Anspruch, wobei sich zwei (5, 6) der drei Wasserablenkwände (5, 6, 7), die als erste und zweite Wand bezeichnet werden, im Wesentlichen parallel zueinander erstrecken, wobei die andere Ablenkwand (7), die als dritte Wand bezeichnet wird, so angeordnet ist, dass sie die erste und die zweite Ablenkwand (5, 6) miteinander verbindet.

4. Gehäuse nach einem der vorangehenden Ansprüche, umfassend zwei getrennte Luftzirkulationskanäle, wobei einer der Kanäle so konfiguriert ist, dass er Luft außerhalb des Kraftfahrzeugs zirkulieren lässt, und der andere der Kanäle so konfiguriert ist, dass er Luft aus einem Fahrgastraum des Kraftfahrzeugs zirkulieren lässt.

5. Heizungs-, Lüftungs- und/oder Klimatisierungssystem für ein Kraftfahrzeug zur thermischen Behandlung eines Luftstroms, umfassend ein Gehäuse nach einem der vorangehenden Ansprüche.

6. System nach dem vorangehenden Anspruch, wobei das System im Verbindungsabschnitt keine Dichtung aufweist.

7. System nach einem der Ansprüche 5 oder 6, umfassend eine Steuereinheit für einen Lufteinlassventilator im Gehäuse, wobei die Steuereinheit im Verbindungsabschnitt angeordnet ist.

## Claims

1. Housing for a motor vehicle heating, ventilation and/or air conditioning system intended for the thermal treatment of an air flow, the housing (1) comprising a joining portion (2) between the housing (1) and a component of the heating, ventilation and/or air conditioning system, said joining portion (2) forming part of a unit called intake unit (30) of the housing (1), intended to receive the intake fan for moving the air in said housing (1), and also a control unit for the intake fan, wherein the joining portion (2) is designed to discharge a flow of water from the air flow and comprises at least one water diversion wall (5, 6, 7) disposed along an edge of an orifice (3) in such a way that the water flows between said wall and another part of the housing (1), said orifice (3) being intended to receive the fan control unit, the housing further comprising:
- a curved or sloping portion (25) disposed downstream of the joining portion (2) relative to the flow of water, **characterized in that** the housing comprises:
- a tongue (26) in the extension of the curved portion (25), and
- a receiving unit (31) for receiving a heat exchanger of the heating, ventilation and/or air conditioning system, said receiving unit (31) being secured to the tongue (26) by an interlocking member (32), the tongue (26) being disposed on the interlocking member (32) while protruding from said interlocking member (32).

2. Housing according to the preceding claim, wherein the orifice (3) is rectangular, and the joining portion (2) comprises three water diversion walls (5, 6, 7).

3. Housing according to the preceding claim, wherein two (5, 6) of the three water diversion walls (5, 6, 7), called first and second walls, extend substantially parallel to each other, the other diversion wall (7), called third wall, being disposed in such a way as to join the first and the second diversion walls (5, 6).

4. Housing according to any one of the preceding claims, comprising two separate air circulation channels, one of the channels being designed to circulate air from outside the motor vehicle, the other of the channels being designed to circulate air from a passenger compartment of the motor vehicle.

5. Motor vehicle heating, ventilation and/or air conditioning system intended for the thermal treatment of an air flow, comprising a housing according to any one of the preceding claims.

6. System according to the preceding claim, the system having no seal in the joining portion.

7. System according to either of Claims 5 and 6, comprising a control unit for an air intake fan in the housing, the control unit being disposed in the joining portion.
